# EUROPÄISCHE PATENTANMELDUNG

(11) **EP 2 275 754 A2**
(43) Veröffentlichungstag der Anmeldung: **19.01.2011**
(21) Anmeldenummer: 10003240.8
(22) Anmeldetag: 26.03.2010
(51) Int. Cl.: F24J 2/54

(54) **Nachführeinheit sowie Sonnenkollektor- oder Photovoltaikeinheit**

(30) Priorität: 27.05.2009 DE 102009022876
(71) Anmelder: HISTA Elektroanlagenbau GmbH, 93073 Neutraubling (DE)
(72) Erfinder: Wagner, Franz, 93083 Obertraubling (DE)
(74) Vertreter: Graf, Helmut

(57) **Zusammenfassung**

Nachführeinheit einer Sonnenkollektor- oder Photovoltaikeinheit, mit einem auf einem Untergrund verankerbaren Rahmengestell und einem Tragrahmen zur Aufnahme wenigstens eines Kollektor- oder Solarmoduls sowie mit einer Antriebseinheit zum Drehen und/oder Schwenken des Tragrahmens relativ zum Rahmengestell.

## Beschreibung

Die Erfindung bezieht sich auf eine Nachführeinheit gemäß Oberbegriff Patentanspruch 1 zur Verwendung bei Sonnenkollektor- oder Photovoltaikeinheiten sowie auf ein Sonnenkollektor- oder Photovoltaikeinheit gemäß Oberbegriff Patentanspruch 14.

Vorrichtungen zur Gewinnung von Energie aus Sonnenstrahlung, d.h. Sonnekollektor- oder Photovoltaikeinheiten sind in unterschiedlichsten Ausführungen bekannt und bestehen beispielsweise aus einem Rahmengestell, mit dem die betreffende Einheit auf einem Untergrund angeordnet und in geeigneter Weise verankert wird, sowie aus einem Tragrahmen, auf dem wenigstens ein Kollektor- oder Solarmodul vorgesehen ist. Um den Wirkungsgrad derartiger Sonnenkollektor- oder Photovoltaikeinheiten zu verbessern, ist es insbesondere auch bekannt, das Rahmengestell und den Tragrahmen als Nachführeinheit auszubilden, und zwar in der Form, dass der Tragrahmen und damit auch das an diesem Tragrahmen vorgesehene Kollektor- oder Solarmodul dem jeweiligen Sonnenstand entsprechend für eine optimale Sonneneinstrahlung nachgeführt werden kann, und zwar beispielsweise durch Schwenken um zwei senkrecht zueinander verlaufende Raumachsen, beispielsweise um eine horizontale und um eine vertikale Raumachse.

Nachteilig ist bei bekannten Vorrichtung u.a. ihre große Bauhöhe, was z.B. die Montage, aber auch das Reinigen des Kollektor- oder Solarmoduls wesentlich erschwert.

Aufgabe der Erfindung ist es, eine Nachführeinheit aufzuzeigen, die bei der Möglichkeit einer optimalen Nachführung des Kollektor- oder Solarmoduls stabile Bauform mit reduzierter Bauhöhe ermöglicht. Zur Lösung dieser Aufgabe ist eine Nachführeinheit entsprechend dem Patentanspruch 1 ausgebildet. Eine Sonnenkollektor- oder Photovoltaikeinheit ist Gegenstand des Patentanspruchs 14. Die erfindungsgemäße Nachführeinheit zeichnet sich u.a. durch eine stabile Bauform aus, so dass eine mit dieser Nachführeinheit ausgebildete Sonnenkollektor- oder Photovoltaikeinheit auch bei hochgestelltem, d.h. gegenüber der Horizontelen geneigtem Kollektor- oder Solarmodul hohen Windbelastungen Stand hält. Weiterhin zeichnet sid die erfindungsgemäße Nachführeinheit u.a. dadurch aus, dass sie bzw. die Sonnenkollektor- oder Photovoltaikeinheit bei horizontaler Ausrichtung des Kollektor- oder Solarmoduls eine reduzierte Bauhöhe aufweisen.

Bevorzugt ist zum Nachführen oder Schwenken des wenigstens einen Kollektor- oder Solarmoduls oder eines Tragrahmens für dieses Modul um eine horizontale Schwenkachse wenigstens ein elektromotorischer Schwenkantrieb vorgesehen sind, der eine Scheren- oder Hebelanordnung mit wenigstens sechs Hebeln aufweist. Von Diesen Hebeln sind wenigstens drei erste Hebel jeweils mit einem Ende um eine gemeinsame Achse parallel zur horizontalen Schwenkachse an einem Rahmengestell oder an einem Zwischenrahmen der Nachführeinheit angelenkt sind und wenigstens drei zweite Hebeln um eine gemeinsame Achse parallel zur horizontalen Schwenkachse am Tragrahmen angelenkt sind. Wenigstens zwei erste Hebel sind an ihrem anderen Ende über ein erstes Verbindungselement, beispielsweise in Form eines ersten Gelenkbolzens mit einander verbunden und damit dem ersten Verbindungselement zugeordnet. Wenigstens zwei zweite Hebel sind an ihrem anderen Ende über ein zweites Verbindungselement, beispielsweise in Form eines zweiten Gelenkbolzens (24) mit einander verbunden und damit dem zweiten Verbindungselement zugeordnet. Wenigstens ein weiterer erster Hebel ist mit seinem anderen Ende über das zweite Verbindungselement mit den diesem Verbindungselement zugeordneten zweiten Hebeln gelenkig verbunden. Wenigstens ein weiterer zweiter Hebel ist mit seinem anderen Ende über das erste Verbindungselement mit den diesem Verbindungselement zugeordneten ersten Hebeln gelenkig verbunden. Zwischen dem ersten und zweiten Verbindungselement wirkt ein Stellglied, welches beispielsweise ein Linear-Antrieb, z.B. ein elektromotorisches Stellglied oder ein elektrischer Linear-Antrieb ist.

Bevorzugt weist die Scheren- oder Hebelanordnung drei oder vier erste und/oder zweite Hebel auf.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an einem Ausführungsbeispiel näher erläutert. Es zeigen:

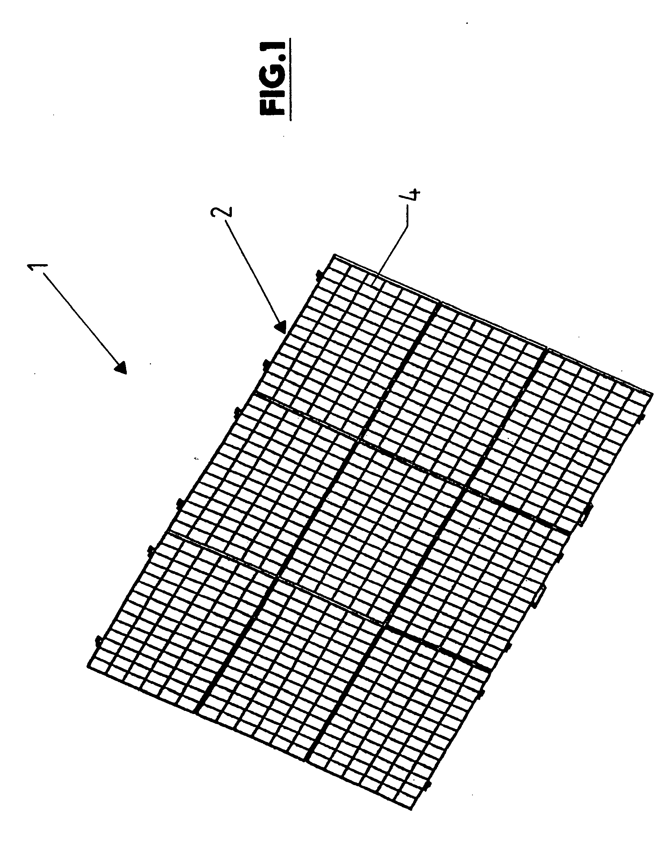

- Fig. 1: in perspektivische Darstellung das Solarmodul (Sonnensegel) eines Photovoltaikeinheit;

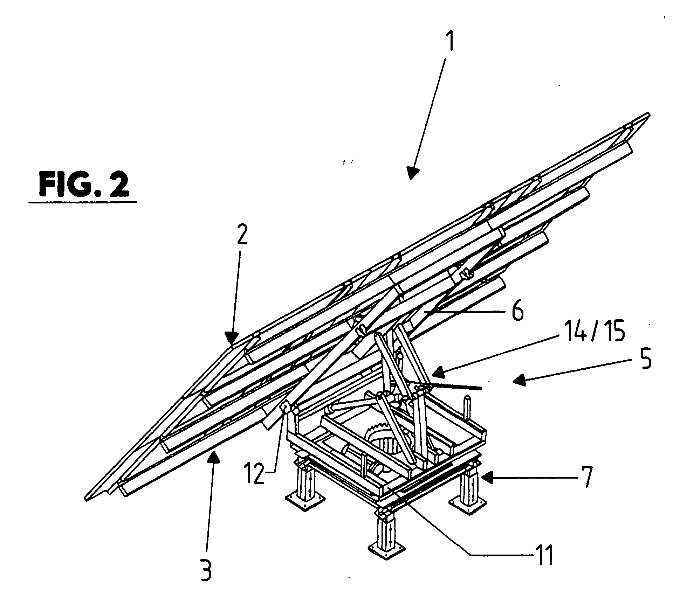

- Fig. 2: in perspektivischer Darstellung und in Rückansicht die Photovoltaikeinheit der Figur 1;

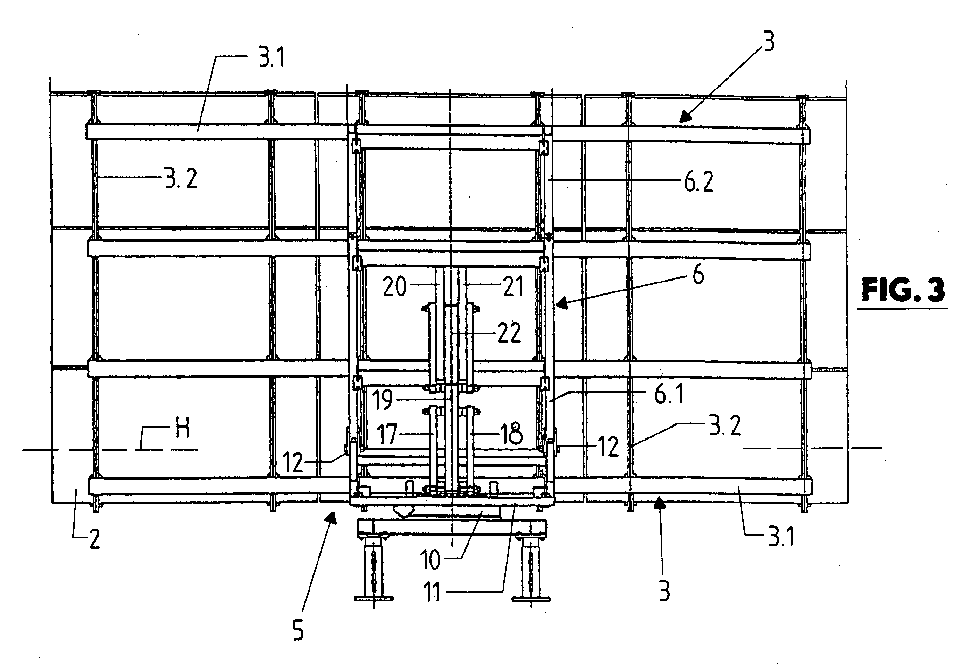

- Fig. 3: eine nicht perspektivische Rückansicht der Photovoltaikeinheit der Figuren 1 und 2;
- Fig. 4 und 5: die Photovoltaikeinheit in Seitenansicht bei unterschiedlichen Betriebszuständen der Nachführeinheit.

Die in den Figuren allgemein mit 1 bezeichnete Photovoltaikeinheit ist Bestandteil einer größeren, eine Vielzahl derartiger Einheiten aufweisenden Photovoltaikaußenanlage. Die Photovoltaikeinheit 1 besteht im Wesentlichen aus einem Solarmodul 2, welches von mehreren an einem Rahmen 3 befestigten Solarmodulelementen 4 gebildet ist, und zwar bei der dargestellten Ausführungsform von insgesamt neun Solarmodulelementen 4, die in bekannter Weise einfallendes Licht, insbesondere auch Sonnenlicht in elektrische Energie umwandeln.

Der Rahmen 3 besteht im Wesentlichen aus mehreren parallel zueinander angeordneten schienenartigen Rahmenelementen 3.1, die sich jeweils in Längsrichtung des rechteckförmigen Solarmoduls 2 erstrecken sowie aus mehreren die Rahmenelemente 3.1 miteinander verbindenden Rahmenelementen 3.2.

Die Photovoltaikeinheit 1 beseht weiterhin aus einer in den Figuren allgemein mit 5 bezeichneten mechanischen Nachführeinheit, die u.a. einen oberen Tragrahmen 6 und ein unteres Rahmengestell 7 aufweist. An dem Tragrahmen 6 ist der Rahmen 3 des Solarmoduls 2 befestigt. Mit dem Rahmengestell 7 sind die Nachführeinheit 5 und das Photovoltaikeinheit 1 in geeigneter Weise auf einem Untergrund befestigt oder verankert, und zwar bei der in den Figuren dargestellten Ausführungsform in der Weise, dass an den Eckpunkten eines das Rahmengestell 7 bildenden und im montierten Zustand in einer horizontalen oder im Wesentlichen horizontalen Ebene angeordneten quadratischen Rahmens 8 vier Füße 9 vorgesehen sind, mit denen das Rahmengestell 7 jeweils an nicht dargestellten, in den Untergrund eingebrachten Fundament oder dergleichen verankert ist.

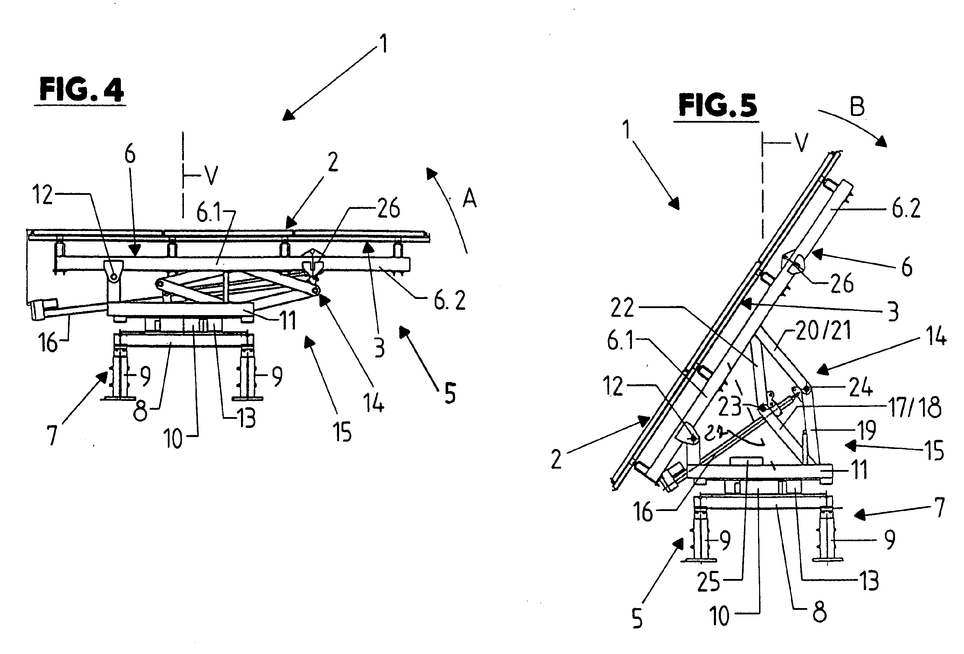

Zum Nachführen des Solarmoduls 2 in Abhängigkeit vom Sonnenstand ist der Tragrahmen 6 relativ zum Rahmengestellt 7 um eine vertikale Achse V sowie auch um eine horizontale Achse H dreh- bzw. schwenkbar. Hierfür ist auf der Oberseite des Rahmengestells 7 ein Rahmenelement oder Zwischenrahmen 11 mittels eines Drehlagers bzw. Drehkranzes um die vertikale Achse V drehbar gelagert. An diesem Hilfs- oder Zwischenrahmen 11 ist der Tragrahmen 6 um eine horizontale Achse H schwenkbar vorgesehen, und zwar mit Hilfe von zwei Gelenken 12, die in Richtung der Achse H voneinander beabstandet und jeweils an einer senkrecht zu dieser Achse verlaufenden Längsseite des bei der dargestellten Ausführungsform rechteckförmigen Tragrahmens 6 vorgesehen sind. Bei am Tragrahmen 6 montiertem Solarmodul 2 sind die Rahmenelemente 3.1 mit ihrer Längserstreckung parallel zu der Schwenkachse H bzw. parallel zu den Achsen der Gelenke 12 orientiert und damit senkrecht zu den Längsseiten, aber parallel zu den Schmalseiten des rechteckförmigen Tragrahmens 6. Die Anordnung ist weiterhin so getroffen, dass sich die von den Gelenken 12 gebildeten horizontale Schwenkachse H im Bereich oder in der Nähe der einen horizontalen Seite des Tragrahmens 6 und auch des Solarmoduls 2 befindet, d.h. von dieser bei der Darstellung der Figuren 4 und 5 linken Seite des Tragrahmens 6 und des Solarmoduls 2 einen wesentlich kleineren Abstand aufweist, als von der anderen, sich ebenfalls in Richtung der Achse H erstreckenden und bei der Darstellung der Figuren 4 und 5 rechten Seite des Tragrahmens 6 bzw. des Solarmoduls 2.

Der Zwischenrahmen 11 ist bei dargestellten Ausführungsform ebenfalls als im Wesentlichen quadratischer Rahmen ausgebildet, der mit seiner Rahmenebene in einer horizontalen oder im Wesentlichen horizontalen Ebene angeordnet und senkrecht zu der vertikalen Schwenkachse V orientiert ist. Die beiden Gelenke 12 befinden sich dabei jeweils an einem Ende einer Rahmenseite des Hilfsrahmens 11.

Zum Schwenken des Hilfsrahmens 11 um die Achse V dient ein beispielsweise am Zwischenrahmen 11 vorgesehener elektromotorischer Stell- oder Drehantrieb, der in den Figuren schematisch mit 13 angegeben und beispielsweise als elektrischer Getriebemotor ausgeführt ist. Die Ausgangswelle des Stellantriebs 13 trägt ein Zahnrad, welches mit einer den Drehkranz 10 umgebenden Verzahnung zusammenwirkt, sodass bei aktiviertem Antrieb 13 das Drehen des Hilfsrahmens 11 und damit auch das Solarmodul 2 um die Achse V erfolgt.

Zum Schwenkens des Tragrahmens 6 und damit dessen Solarmoduls 2 um die Achse H dient ein Schwenkantrieb, der in den Figuren allgemein mit 14 bezeichnet ist und bei der dargestellten Ausführungsform aus einer Scherenanordnung 15 und aus einem Stellglied 16 besteht, welches beispielsweise ein Linear-Antrieb, z.B. ein elektromotorisches Stellglied oder ein elektrischer Linear-Antrieb ist.

Die Scherenanordnung 15 besteht bei der dargestellten Ausführungsform aus insgesamt sechs Hebeln, und zwar aus drei Hebeln 17 - 19, die jeweils mit einem Ende um eine gemeinsame, parallel zur Achse H orientierte Achse am Zwischenrahmen 11 angelenkt sind, und zwar in der Mitte der den Gelenken 12 gegenüberliegenden Rahmenseite des Hilfsrahmens 11. Weiterhin besteht die Scherenanordnung 15 aus den drei Hebeln 20 - 22, die mit einem Ende um eine gemeinsame parallel zur Achse H orientierte Achse am Tragrahmen 6 angelenkt sind, und zwar gegenüber der gemeinsamen Achse der Gelenke 12 radial versetzt.

Die Hebel 17 und 18 und die Hebel 20 und 21 bilden jeweils ein Hebelpaar und sind an ihren dem Zwischenrahmen 11 und dem Tragrahmen 6 entfernt liegenden Enden durch einen Gelenkbolzen 23 bzw. 24 miteinander verbunden, der mit seiner Achse parallel zur Achse H orientiert ist. An dem Gelenkbolzen 23 der Hebel 1 7 und 18 ist in der Mitte zwischen diesen Hebeln der Hebel 22 mit seinem dem Tragrahmen 6 entfernt liegenden Ende angelenkt. An dem Gelenkbolzen 24 der Hebel 20 und 21 ist in der Mitte zwischen diesen Hebeln der Hebel 19 mit seinem dem Zwischenrahmen 11 entfernt liegenden Ende angelenkt. Zwischen den Gelenkbolzen 23 und 24 wirkt das elektromotorische Stellglied 16, sodass durch Auseinanderbewegen der Gelenkbolzen 23 und 24 der Tragrahmen 6 und mit diesem das Solarmodul 2 um die Achse H nach unten in eine horizontale Ausgangslage geschwenkt wird (Pfeil A) und durch Aufeinanderzubewegen der Gelenkbolzen 23 und 24 der Tragrahmen 6 und mit diesem das Solarmodul 2 um die Achse H nach oben geschwenkt wird (Pfeil B).

Der das Stellglied bildende Linearantrieb besteht bei der dargestellten Ausführungsform im Wesentlichen aus einer Gewindespindel, aus einem die Gewindespindel rotierend antreibenden Elektromotor (Getriebemotor) und aus einem auf der Spindel geführten Muttergewindestück. Ein Ende der Gewindespindel ist drehbar aber axial nicht verschiebbar an dem Gelenkbolzen 24 oder an einem dort vorgesehenen, nicht dargestellten Lagerstück gelagert und das mit der Gewindespindel zusammenwirkende Muttergewindestück ist am Gelenkbolzen 23 gelagert.

Zur Steuerung des Drehantriebs 13 sowie des Schwenkantriebs 14 ist auf dem Zwischenrahmen 11 weiterhin ein elektrisches Steuermodul 25 vorgesehen, welches über eine Datenverbindung, die bevorzugt für einen bidirektionalen Datenaustausch ausgebildet ist, mit einer externen Steuereinheit in Verbindung steht. Letztere ist bevorzugt für mehrere Einheiten 1 gemeinsam vorgesehen. Von der externen Steuereinheit erhält das Steuermodul 25 die für die Steuerung des Drehantriebs 13 sowie des Schwenkantriebs 14 notwendigen Steuerbefehle, insbesondere auch zum Nachführen des Solarmoduls 2 in Abhängigkeit von dem jeweiligen Sonnenstand sowie zum Bewegen des Solarmoduls 2 in die horizontale Ausgangslage, beispielsweise zur Vermeidung einer Zerstörung des Solarmoduls 2 durch zu hohe Windbelastung bei starkem Wind und, für Reinigungs- und Reparaturzwecke usw. Das Steuermodul 25 ist mit eigener Intelligenz ausgebildet, sodass es aufgrund der von der externen Steuereinheit übermittelten Daten und der von Sensoren modulseitiger Regelkreise gelieferten Daten eine exakte Nachführung bzw. Einstellung des Solarmoduls 2 ermöglicht.

Eine Besonderheit der Photovoltaikeinheit 1 besteht u.a. in der Nachführung des Solarmoduls 2 durch Schwenken um zwei senkrecht zueinander verlaufende Raumachsen, nämlich um die Achse V und H. Eine wesentliche Besonderheit der Photovoltaikeinheit 1 besteht aber darin, dass sie auch in der Ausgangslage des Solarmoduls 2 eine extrem niedrige Bauhöhe aufweist, was einerseits dadurch bedingt ist, dass das Nachführung durch Schwenken um die beiden senkrecht zueinander verlaufenden Raumachsen V und H erfolgt, und andererseits darauf zurückzuführen ist, dass sich die beiden Gelenk 12 bzw. deren gemeinsame Schwenkachse H im Bereich einer Längsseite des Solarmoduls 2 befindet. Selbst bei extrem stark aus der Ausgangslage (Figur 4) um die Achse H geschwenktem Solarmodul 2 (Figur 5) steht der dann untere, horizontale Rand des S Solarmoduls 2 nicht über die Unterseite des horizontalen Rahmens 8 des Rahmengestells 7 vorsteht. Diese in der Ausgangslage sehr geringe Bauhöhe der Photovoltaikeinheit 1 hat erhebliche Vorteile, insbesondere auch hinsichtlich einer vereinfachten Montage und Reinigung des Solarmoduls 2. Weiterhin trägt die niedrige Bauform auch dazu bei, dass selbst bei starkem Wind auf das Solarmodul 2 in der horizontalen und bodennahen Ausgangslage nur stark reduzierte Windkräfte einwirken.

Ein weiterer wesentlicher Vorteil besteht darin, dass die Photovoltaikeinheit 1 ohne die Füße 9 mit dem Rahmen 8 des Rahmengestells 7 auch direkt auf einem Untergrund, beispielsweise auf einer Dachaußenseite oder einer dortigen Tragkonstruktion montiert werden kann.

Die von dem Rahmengestell 7, dem Tragrahmen 6, dem Zwischenrahmen 11, dem Drehantrieb 13 und dem Schwenkantrieb 14 bestehende Nachführeinheit 5 wird zusammen mit dem Steuermodul 25 als komplett montierte Baueinheit ausgeliefert. Nach der Montage der Nachführeinheit 5 am Aufstellungsort bzw. an dort vorbereiteten Fundamenten erfolgt bei in die horizontale Ausgangslage geschwenktem Tragrahmen 6 die Montage des Solarmoduls 2 auf diesem Tragrahmen 6, d.h. die Montage des Rahmens 3 und der Solarmodulelemente 4.

Um den Transport der Nachführeinheit 5 als komplette Baueinheit vom Herstellungsort an den Verwendungsort zu vereinfachen, ist die Nachführeinheit 5 kompakt ausgebildet. Bei einer bevorzugten Ausführungsform ist hierfür der Tragrahmen 6 zweiteilig ausgebildet, und zwar bestehend aus einem mit den Gelenken 12 am Zwischenrahmen 11 angelenkten Rahmenteil 6.1 und aus einem weiteren Rahmenteil 6.2, welches mit Gelenken 26 am Rahmenteil 6.1 angelenkt ist. Für den Transport ist das Rahmenteil 6.2 auf das Rahmenteil 6.1 geklappt, sodass der Tragrahmen 6 nur geringfügig über den Zwischenrahmen 11 bzw. über das Rahmengestell 7 vorsteht. Am Aufstellungsort wird dann das Rahmenteil 6.2 vom Rahmenteil 6.1 weggeschwenkt, sodass sich die beiden Rahmenteile 6.1 und 6.2 zu dem rechteckförmigen Tragrahmen 6 ergänzt, dessen Länge gleich oder etwa gleich derjenigen Breite ist, die das rechteckförmige Solarmodul 2 senkrecht zur Achse H aufweist.

Mit 27 ist in der Figur 5 sehr schematisch eine Entlastungs- und/oder Dämpfungseinheit bezeichnet, die im einfachsten Fall von wenigstens einem Fluid-Dämpfer (z.B. Gas- oder Öl-Dämpfer) oder von wenigstens einer Fluid-Feder (z.B. Gas- und/oder Ölfeder) gebildet ist und dazu dient, den Tragrahmen 6 aus einer aufgestellten Position, in der der Tragrahmen 6 und das dortige Solarmodul 2 mit der horizontalen einen Winkel einschließen, in die horizontale Ausgangslage sanft um die horizontale Achse H zu schwenken, und zwar selbst dann, wenn beispielsweise bei einem Defekt des Stellgliedes 16 oder des Linearantriebes, z.B. bei einem Reißen der Gewindespindel des Linearantriebes die Verbindung zwischen den beiden Gelenkbolzen 23 und 24 oder den entsprechenden Verbindungselementen verloren geht. Bei einer bevorzugten Ausführungsform ist die Entlastungs- und/oder Dämpfungseinheit 27 auch so ausgebildet, dass sie den Schwenkantrieb 14 zumindest teilweise von dem Massengewicht des Tragrahmens 6 und des dortigen Solarmoduls 2 entlastet, und zwar insbesondere in dem unmittelbar an die horizontale Ausgangslage anschließenden Winkelbereich der Schwenkbewegung um die horizontale Achse H.

Vorstehend wurde davon ausgegangen, dass ein einziger Schwenkantrieb 14 mit einer einzigen Scherenanordnung 15 vorgesehen ist. Grundsätzlich besteht auch die Möglichkeit, wenigstens zwei Scherenanordnungen 15 mit jeweils einem zugehörigen Stellglied, beispielsweise wiederum in Form eines Linearantriebes vorzusehen.

Die Erfindung wurde voranstehend an einem Ausführungsbeispiel beschrieben. Es versteht sich, dass zahlreiche Änderungen sowie Abwandlungen möglich sind, ohne dass dadurch der der Erfindung zugrundeliegende Erfindungsgedanke verlassen wird.

### Bezugszeichenliste

- 1: Photovoltaikeinheit
- 2: Solarmodul
- 3: Rahmen
- 3.1, 3.2: Rahmenelement
- 4: Solarmodulelement
- 5: Nachführeinheit
- 6: Tragrahmen
- 6.1, 6.2: Rahmenteil
- 7: Rahmengestell
- 8: Rahmen
- 9: Fuß
- 10: Drehlager oder Drehkranz
- 11: Hilfs- oder Zwischenrahmen
- 12: Gelenk
- 13: Drehantrieb
- 14: Schwenkantrieb
- 15: Scherenanordnung
- 16: Linearantrieb oder Stellglied
- 17 - 22: Hebel
- 23, 24: Gelenkbolzen
- 25: Steuereinheit
- 26: Gelenk
- 27: Entlastungs- und/oder Dämpfungseinheit oder -element

- A: Schwenkbewegung des Solarmoduls 2 aus der horizontalen Ausgangslage
- B: Schwenkbewegung des Solarmoduls in die horizontale Ausgangslage

## Patentansprüche

1. Nachführeinheit einer Sonnenkollektor- oder Photovoltaikeinheit (1), mit einem auf einem Untergrund verankerbaren Rahmengestell (7) und einem Tragrahmen (6) zur Aufnahme wenigstens eines Kollektor- oder Solarmoduls (2) sowie mit einer Antriebseinheit (13, 14) zum Drehen und/oder Schwenken des Tragrahmens (6) relativ zum Rahmengestell (7),
**dadurch gekennzeichnet, dass** der Tragrahmen (6) um eine vertikale Achse (V) sowie um eine hierzu senkrecht orientierte horizontale Achse (H) schwenkbar am Rahmengestell (7) vorgesehen ist, und dass sich die horizontale Schwenkachse (H) im Bereich einer parallel zu dieser Achse verlaufenden Seite des Tragrahmens (6) befindet.

2. Nachführeinheit nach Anspruch 1, **dadurch gekennzeichnet,**
**dass** zum Schwenken des Tragrahmens (6) um die horizontale Schwenkachse (H) wenigstens ein elektromotorischer Schwenkantrieb (14) vorgesehen sind, dass der Schwenkantrieb (14) eine Scheren- oder Hebelanordnung (15) mit wenigstens sechs Hebeln aufweist, von denen wenigstens drei erste Hebel (17 - 19) jeweils mit einem Ende um eine gemeinsame, parallel zur horizontalen Schwenkachse (H) orientierte Achse am Rahmengestell (7) oder an einem Zwischenrahmen (11) angelenkt sind und von den denen wenigstens drei zweite Hebeln (20 - 22) um eine gemeinsame parallel zur horizontalen Schwenkachse (H) orientierte Achse am Tragrahmen (6) angelenkt sind,
**dass** wenigstens zwei erste Hebel (17, 18) an ihrem anderen Ende über ein erstes Verbindungselement, beispielsweise in Form eines ersten Gelenkbolzens (23) mit einander verbunden und damit dem ersten Verbindungselement zugeordnet sind,
**dass** wenigstens zwei zweite Hebel (20, 21) an ihrem anderen Ende über ein zweites Verbindungselement, beispielsweise in Form eines zweiten Gelenkbolzens (24) mit einander verbunden und damit dem zweiten Verbindungselement zugeordnet sind,
**dass** wenigstens ein weiterer erster Hebel (19) mit seinem anderen Ende über das zweite Verbindungselement (24) mit den diesem Verbindungselement zugeordneten zweiten Hebeln (20, 21) gelenkig verbunden ist, und zwar um eine Achse parallel zur horizontalen Schwenkachse (H),
**dass** wenigstens ein zweiter Hebel (22) mit seinem anderen Ende über das erste Verbindungselement (23) mit den diesem Verbindungselement zugeordneten ersten Hebeln (17, 18) gelenkig verbunden ist, und zwar um eine Achse parallel zur horizontalen Schwenkachse (H), und
**dass** ein zwischen dem ersten und zweiten Verbindungselement (23, 24) wirkendes Stellglied (16), vorzugsweise in Form eines Linearantriebs vorgesehen ist.

3. Nachführeinheit nach Anspruch 2, **dadurch gekennzeichnet, dass** die Scheren- oder Hebelanordnung (15) drei oder vier erste und/oder zweite Hebel (17 - 19; 20 - 22) aufweist.

4. Nachführeinheit nach einem der vorhergehenden Ansprüche, **gekennzeichnet durch** wenigstens ein Zwischen dem Tragrahmen (6) und dem Rahmengestell (7) oder dem Zwischenrahmen (11) wirkendes Entlastungs- und/oder Dämpfungseinheit oder -element (27).

5. Nachführeinheit nach einem der vorhergehenden Ansprüche, **dadurch gekennzeichnet, dass** die horizontale Schwenkachse (H) der einen, parallel zu dieser Achse verlaufenden Seite des Tragrahmens (6) im Wesentlichen näher liegt als der gegenüberliegenden, ebenfalls zur horizontalen Schwenkachse (H) orientierten Seite des Tragrahmens (6).

6. Nachführeinheit nach einem der vorhergehenden Ansprüche, **dadurch gekennzeichnet, dass** der Tragrahmen (6) an einem Tragelement, z.B. an einem Hilfs- oder Zwischenrahmen (11) um die horizontale Schwenkachse (H) schwenkbar vorgesehen ist, und dass das Tragelement um die vertikale Schwenkachse (V) dreh- oder schwenkbar am Rahmengestell (7) gelagert ist.

7. Nachführeinheit nach Anspruch 5, **dadurch gekennzeichnet, dass** für die Lagerung des Tragelementes ein Schwenk- oder Drehlager in Form eines Drehkranzes oder einer Kugelführung vorgesehen ist.

8. Nachführeinheit nach einem der vorhergehenden Ansprüche, **dadurch gekennzeichnet, dass** der Tragrahmen (6) aus wenigstens zwei Rahmenteilen (6.1, 6.2) bestehen, die klappbar oder gelenkig miteinander verbunden sind, sodass der Tragrahmen (6) zusammenklappbar ist, insbesondere zur Reduzierung der Rahmengröße während eines Transportes und/oder einer Lagerung.

9. Nachführeinheit nach einem der vorhergehenden Ansprüche, **dadurch gekennzeichnet, dass** zum Schwenken des Tragrahmens (6) um die vertikale Achse (V) ein elektromotorischer Drehantrieb (13).

10. Nachführeinheit nach einem der vorhergehenden Ansprüche, **dadurch gekennzeichnet, dass** der Schwenkantrieb (14) Bestandteil einer Drei-Punkt-Lagerung für den Tragrahmen (6) am Tragelement oder Hilfsrahmen (11) ist.

11. Nachführeinheit nach einem der vorhergehenden Ansprüche, **gekennzeichnet durch** ein elektronisches Steuermodul (25) zum Steuern des Drehantriebs (13) und des Schwenkantriebs (14).

12. Nachführeinheit nach einem der vorhergehenden Ansprüche, **dadurch gekennzeichnet, dass** der Drehantrieb (13) und/oder der Schwenkantrieb (14) und/oder das elektronische Steuermodul (25) am Tragelement oder Hilfsrahmen (11) vorgesehen sind.

13. Nachführeinheit nach einem der vorhergehenden Ansprüche, **dadurch gekennzeichnet, dass** der Tragrahmen (6) in einer Achsrichtung radial zur horizontalen Schwenkachse (H) eine Länge aufweist, die in etwa gleich der Breite eines rechteckförmigen Solarmoduls (2) ist, und dass die Breite, die der Tragrahmen (6) in Richtung der horizontalen Schwenkachse (H) aufweist, wesentlich kleiner ist als die Breite und/oder Länge des rechteckförmigen Solarmoduls (2).

14. Sonnenkollektor- oder Photovoltaikeinheit mit wenigstens einem Kollektor- oder Solarmodul (2) an einem Tragrahmen (6) einer Nachführeinheit (5), **dadurch gekennzeichnet, dass** die Nachführeinheit (5) nach einem der vorhergehenden Ansprüche ausgebildet ist.
